# EUROPEAN PATENT APPLICATION

(11) **EP 1 914 746 A2**
(43) Date of publication of application: **23.04.2008**
(21) Application number: 07109186.2
(22) Date of filing: 30.05.2007
(51) Int. Cl.: G11B 19/20

(54) **Spindle motor assembly and information recording and/or reproducing device having the same**

(30) Priority: 18.10.2006 KR 20060101337
(71) Applicant: Samsung Electronics Co., Ltd., Suwon-si Gyeonggi-do (KR)
(72) Inventor: Kim, Myoung-joon, Yeongtong-gu Suwon-si Gyeonggi-do (KR); Kim, Bong-joo, Yeongtong-gu, Suwon-si Gyeonggi-do (KR); Cho, Young-ho, Paldal-gu, Suwon-si Gyeonggi-do (KR); Kang, Sung-wook, 2-dong, Seocho-gu Seoul (KR)
(74) Representative: Zimmer, Franz-Josef

(57) **Abstract**

A spindle motor assembly and an information recording/reproducing device having the same. The spindle motor assembly includes a spindle motor (110), a turntable (120) to be rotated by the spindle motor together with a disk placed and supported thereon, and a support pad (140) provided on the turntable to support a lower surface of the disk; wherein the support pad is provided at a point that corresponds to 2/3 of a diameter of the turntable with respect to a rotation center of the disk.

## Description

### BACKGROUND OF THE INVENTION

### 1. Field of the Invention

The present general inventive concept relates to a spindle motor assembly and an information recording and/or reproducing device having the same. More particularly, the present general inventive concept relates to a spindle motor assembly and an information recording and/or reproducing device having the same, which can rotate a disk while supporting the disk.

### 2. Description of the Related Art

Generally, an information recording/reproducing device such as a camcorder can record an image of a captured object on a recording medium such as a tape, hard disk, CD, memory card, and so forth, or reproduce the recorded image data. Recently, with the trend of miniaturization and weight reduction of information recording/reproducing devices, devices utilizing miniaturized disks as recording media have been developed and produced.

Such an information recording/reproducing device can be provided with a display unit together with a view finder through which a user can view the scene to compose an image to be captured. The display unit displays captured images or replayed images.

Since such an information recording/reproducing device is typically carried by a user, miniaturization and weight reduction thereof is required. Recently, 80mm disks have been adopted.

In order to adopt an 80mm disk, an information recording/reproducing device is provided with a disk loading device. This disk loading device includes a spindle motor assembly to rotate the disk while supporting the disk, and an optical pickup unit. The disk loading device as constructed above can be installed in the information recording/reproducing device so that it can be loaded into and unloaded from the body of the information recording/reproducing device. The disk loading device may be provided with a cover that can be opened and closed to open and close a disk mounting unit therein.

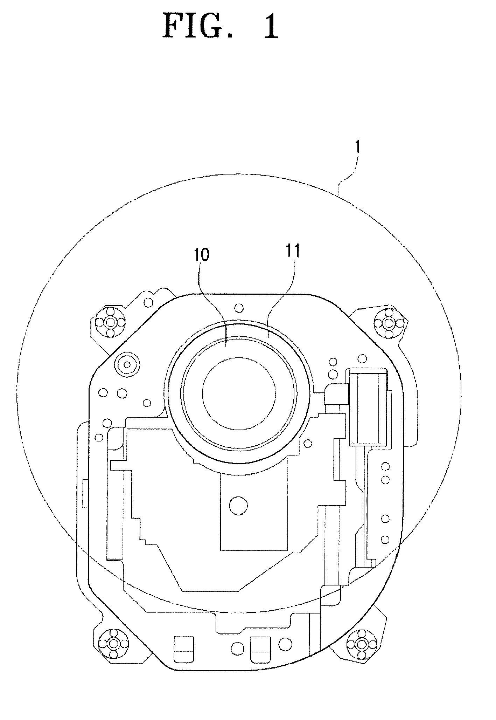

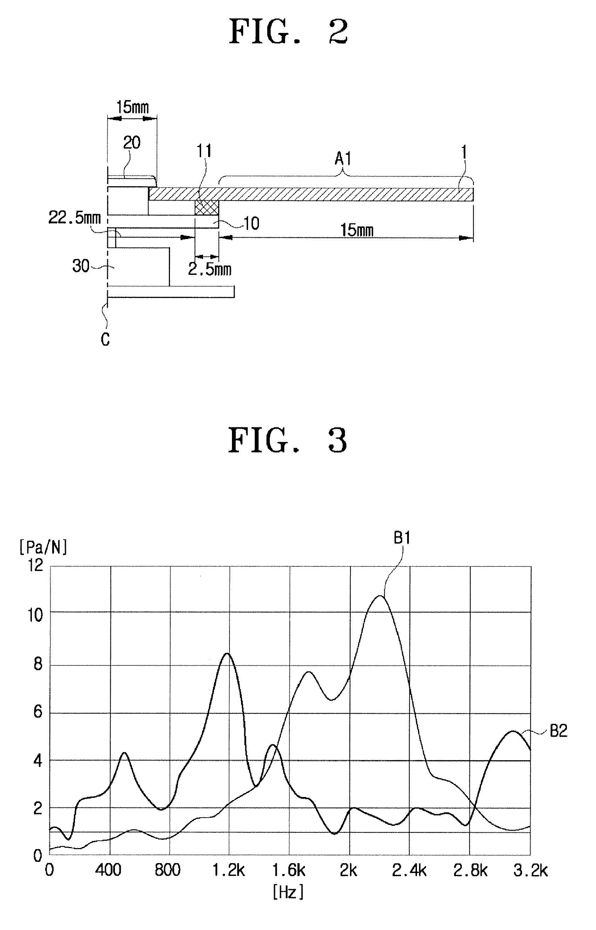

The spindle motor assembly, as illustrated in FIGS. 1 and 2, includes a turntable 10 to support a disk 1, a chucking unit 20 to chuck the disk 1 placed on the turntable 10, and a spindle motor 30 to rotate the turntable 10.

On the outermost side of the upper surface of the turntable 10, a support pad 11 to support the lower surface of the disk 1 is provided. In the case of an 80mm disk 1 mounted on the existing spindle motor 30, the support pad 11 supports a point on the lower surface of the disk where the rotation radius of the disk becomes about 22.5mm from the rotation center of the disk, and the chucking unit 20 supports a point on the upper surface of the disk where the rotation radius of the disk becomes about 15mm from the rotation center of the disk.

Here, since the start point in the lead in area of the disk corresponds to a disk radius of 23mm (i.e., the disk diameter of 46mm), it is required for an object lens of the pickup unit to be positioned in this area. Accordingly, the size of the turntable is generally designed to be less than the diameter of 30mm in consideration of the size of an actuator of the pickup unit.

According to the above-described structure, a noise is generated due to the upward/downward vibration of the rotating disk 1 in a section A1 between the point supported by the pad 11 and the outer periphery of the disk 1.

In an experiment, an 80mm disk was mounted on the spindle motor assembly having the above-described structure, an impact was applied to a shaft part of the spindle motor 30, and noise generated from the disk 1 was measured. As illustrated in graph B1 of FIG. 3, the generated noise can be represented as a frequency response function (FRF). Referring to FIG. 3, the maximum response band of the noise is in the range of 1.7 KHz to 2.2 KHz, and thus includes the switching frequency of the spindle motor 30, which corresponds to 2160Hz (45Hz, 12 slots, and 16 poles) band. Accordingly, the noise is greatly generated from the disk due to the FRF characteristics of this band.

The noise generated during the recording of video/audio signals on the disk may flow into a microphone part of the information recording/reproducing device such as a disk camcorder, and may be recorded on the disk together with the audio signal. When the above-described disk is reproduced by a DVD player or a PC, the noise is reproduced together with the audio signal which noise disrupts the audio signal to an extent to annoy the user.

### SUMMARY OF THE INVENTION

The present general inventive concept may provide a spindle motor assembly and an information recording/reproducing device having the same, which has an improved structure to reduce vibration generated during the rotation of a disk.

Additional aspects and advantages of the present general inventive concept will be set forth in part in the description which follows and, in part, will be obvious from the description, or may be learned by practice of the general inventive concept.

The foregoing and other objects and utilities of the present general inventive concept may be achieved by providing a spindle motor assembly which includes a spindle motor, a turntable to be rotated by the spindle motor together with a disk placed and supported thereon, and a support pad, provided on the turntable, to support a lower surface of the disk; where the support pad is provided at a point that corresponds to 2/3 of the diameter of the turntable on the basis of a rotation center of the disk.

The diameter of the turntable may be within approximately 30mm.

The width of the support pad may be in the range from about 2mm to about 3mm.

The support pad may be made of rubber.

The spindle motor assembly according to various embodiments of the present general inventive concept may further include a chucking unit, protruded from the rotation center part of the turntable, to clamp an upper surface of the disk.

The disk may have the diameter of 80mm.

The foregoing and other objects and utilities of the present general inventive concept may be achieved by providing an information recording/reproducing device which includes a spindle motor assembly provided with a turntable to place and to support a disk thereon, a spindle motor to rotate the turntable, and a support pad, provided on the turntable, to support the disk, an optical pickup to record/reproduce optical information by irradiating light onto the disk; an actuator to drive the optical pickup, and a control unit to control driving of the spindle motor, the optical pickup, and the actuator; where the support pad is arranged at a point that corresponds to 2/3 of the diameter of the turntable on the basis of a rotation center of the disk.

The foregoing and other objects and utilities of the present general inventive concept may also be achieved by providing a spindle motor assembly including a spindle motor, a turntable to rotate by the spindle motor, and a support pad disposed on the turntable and spaced apart from an outer circumference of the turntable by a distance longer than a width of the support pad in a radial direction of the turntable.

The foregoing and other objects and utilities of the present general inventive concept may also be achieved by providing an information recording and/or reproducing device including a spindle motor assembly having a spindle motor, a turntable to rotate by the spindle motor, and a support pad disposed on the turntable and spaced apart from an outer circumference of the turntable by a distance longer than a width of the support pad in a radial direction of the turntable to support a disk; a pickup unit to record and/or reproduce information to and/or from the disk, and a loading unit to load and/unload the pickup unit with respect to the disk.

The information recording and/or reproducing device may further include a chucking unit to chuck the disk with the turntable, and the support pad is spaced apart from an outer circumference of the chucking unit by a distance shorter than a width of the support pad in the radial direction.

The foregoing and other objects and utilities of the present general inventive concept may also be achieved by providing an information recording and/or reproducing device including a spindle motor assembly having a spindle motor, a turntable to rotate by the spindle motor, and a support pad disposed on the turntable to support a disk; a chucking unit to chuck the disk with the turntable, and having an outer circumference spaced apart from the support pad by a distance shorter than a width of the support pad in a radial direction of the turntable, a pickup unit to record and/or reproduce information to and/or from the disk, and a loading unit to load and/unload the pickup unit with respect to the disk.

The support pad is spaced apart from an outer circumference of the turntable by a distance longer than the width of the support pad in the radial direction of the turntable to support the disk.

The chuck and the supporting pad of the turntable clamp the disk to reduce a frequency response function characteristic of a vibration generation region of the disk

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a plan view of a conventional spindle motor assembly;

FIG. 2 is a front sectional view of the conventional spindle motor assembly;

FIG. 3 is a graph illustrating a frequency response function during the driving of a spindle motor assembly according to an exemplary embodiment of the present general inventive concept (plot B2) as compared to that of a conventional spindle motor assembly (plot B1);

FIG. 4A is a plan view of a main part of an information recording/reproducing device according to an exemplary embodiment of the present general inventive concept;

FIG. 4B is a plan view of a spindle motor assembly extracted from the structure of FIG. 4A;

FIG. 5 is a view illustrating the construction of an information recording/reproducing device according to an exemplary embodiment of the present general inventive concept; and

FIGS. 6A to 6D are graphs illustrating noises generated during the driving of the spindle motor assembly according to an exemplary embodiment of the present general inventive concept in comparison to those generated according to the conventional spindle motor assembly.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

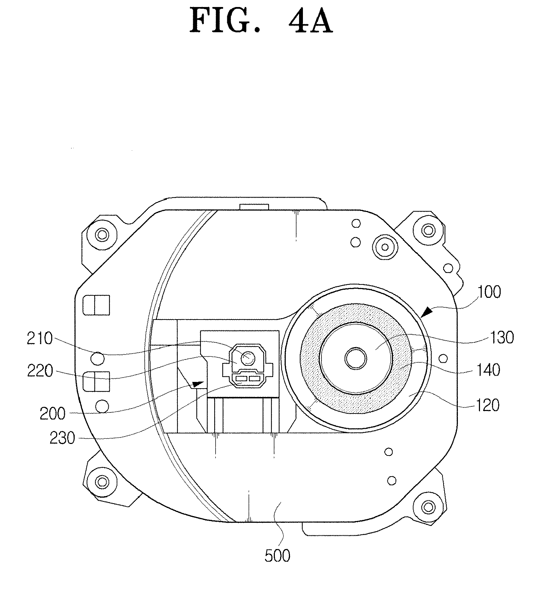

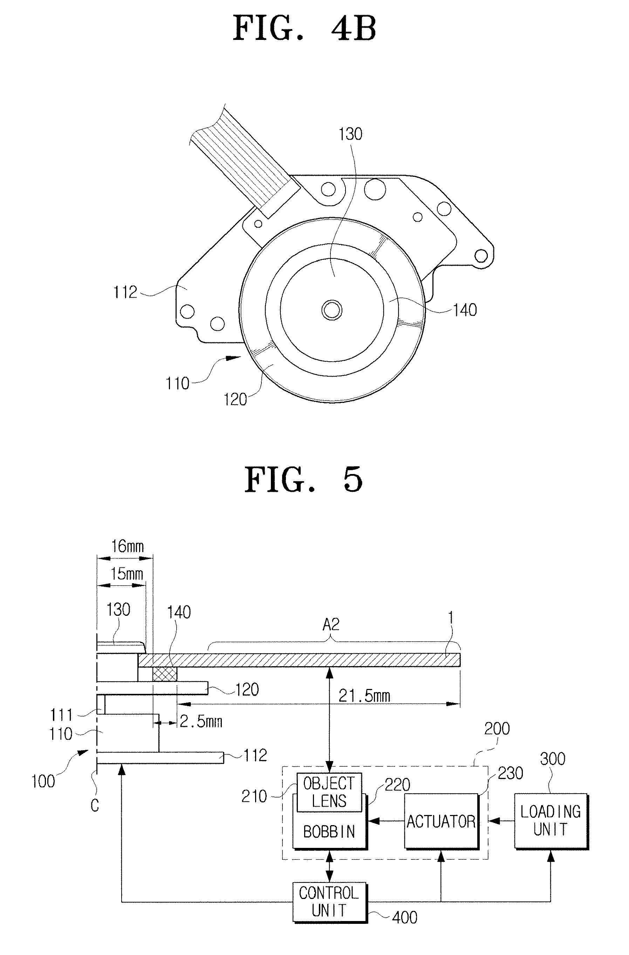

Referring to FIGS. 4A, 4B, and 5, an information recording/reproducing device according to an exemplary embodiment of the present general inventive concept includes a spindle motor assembly 100 to rotate a disk 1 while supporting the disk 1, an optical pickup unit 200 to record and/or reproduce information on and/or from the disk 1, a loading unit 300 to load/unload the optical pickup 200 in a direction of the radius of the disk 1, and a control unit 400.

The disk 1 has a diameter of 80mm, and may be a CD, DVD, BD, or HD-DVD. That is, the information recording/reproducing device may be a disk camcorder using an 80mm disk as its recording medium. The disk camcorder may have a camera unit to photograph an object through a viewfinder, a processor to generate and process an image corresponding to the object, and a recording and/or reproducing unit to record or reproduce the image using the spindle motor assembly 100, the optical pickup unit 200, and the loading unit 300. A communicating unit can be installed in the disk camcorder to communicate with an external device to transmit and received data corresponding to the image.

The spindle motor assembly 100 is provided with a spindle motor 110, a turntable 120, engaged with a shaft 111 of the spindle motor 110 to rotate together with the shaft 111, a chucking unit 130 provided in the center of the turntable 120 to chuck the disk 1 placed on the turntable 120, and a support pad 140 provided on the turntable 120.

The spindle motor 110 is driven to rotate at a specified rotation speed under the control of the control unit 400. The spindle motor 110 is mounted on a loading device (not illustrated) that is movably installed in a main body of the information recording/reproducing device. Although not illustrated in the drawings, the loading device can be easily understood from the well known technologies applied to general disk players, and thus detailed explanation thereof will be omitted for brevity. In FIG. 5, the reference numeral "112" denotes a motor drive board to which the spindle motor 110 is fixed.

The turntable 120 is mounted on the rotating shaft 111 of the spindle motor 110 to rotate together with the rotating shaft 111. The turntable 120 may be in the form of a disk having a diameter of less than about 30mm in consideration of a movement range of the optical pickup unit 200 and the loading unit 300 and a recording region of the disk 1. The disk is placed and supported on the upper part of the turntable 120.

The chucking unit 130 has a specified height from the rotation center of the turntable 120, and is fixed to the turntable 120 and the shaft 111 to rotate together with them. The chucking unit 130 can be easily understood from the well known technologies applied to DVD players and CD players, and thus detailed explanation thereof will be omitted for brevity. The chucking unit 130 can contact and clamp the disk 1 around a center hole of the disk 1, i.e., at a point corresponding to a radius of 7.5 mm from the rotation center as illustrated in FIG. 5. Accordingly, the disk is rotatably supported on the turntable 120 without seceding from the turntable 120.

The support pad 140 is in the form of a ring provided on the turntable 120, and supports a lower surface of the disk 1. The support pad 140 may be made of rubber, and may have a thickness enough to support the disk 1, without slipping, in association with the chucking unit 130. The support pad 140 has a specified width in a radial direction of the turntable 120 or the disk 1. In the present embodiment, it is exemplified that a width of the support pad is 2.5mm. However, this is merely exemplary, and the width of the support pad may be set in the range of 2.5±0.5mm.

In addition, it is possible that the support pad 140 is installed on the turntable 120 so that the support pad 140 is arranged inside the diameter of 20mm from the rotation center of the spindle motor assembly 100. In the present embodiment, as illustrated in FIG. 5, the support pad 140 is installed at a point that corresponds to the radius of 16mm from the rotation center C. In this case, an outer periphery region A2 of the disk 1 may have a length of 21.5mm in the radial direction, except for the width of the support pad 140 corresponding to the length of 2.5mm in the radial direction, becomes the vibration generation region. That is, in a conventional information recording/reproducing device, as illustrated in FIGS. 1 and 2, the support pad 11 is installed on an outermost side of the turntable 10 to produce the vibration generation region A1 of 15mm, whereas in the present embodiment, the support pad 140 is installed adjacent to the rotation center C to widen the vibration generation region A2.

If the vibration generation region is expanded from 15mm to 21.5mm as described above, the frequency response function (FRF) characteristics are changed according to the change in the vibration generation region. In other words, as shown in the graph B2 of FIG. 3, the disk noise is remarkably decreased in comparison to the graph B1 according to the conventional structure. Also, a maximum response band of the generated noise is reduced to 1.2~1.6 KHz in comparison to the conventional structure. In particular, the FRF characteristics of the main vibration regions of 2160Hz generated by the spindle motor 30 become smaller, and thus the disk noise is reduced.

The optical pickup unit 200 includes an object lens 210, a bobbin 220 on which the object lens 210 is mounted, and an actuator 230 to drive the bobbin 220.

The object lens 210 focuses incident light on the disk 1 to record the optical information or to reproduce the recorded information. The bobbin 220 is selectively driven in focusing, tracking, and tilt directions by driving the actuator 230 in a state that the object lens 210 is mounted on the bobbin 220. The optical output of the optical pickup unit 200, the information recording/reproducing operation, and the driving of the actuator 230 are controlled by the control unit 400.

The loading unit 300 performs loading/unloading of the optical pickup 200 in the radial direction of the disk 1. Typically, the loading unit 300 is constructed to move the optical pickup 200 in the radial direction of the disk 1 using a lead screw and rack gear, for example. The construction and operation of the loading unit 300 can be easily understood from the conventional technology, and thus detailed explanation thereof will be omitted. The loading unit 300 is driven under the control of the control unit 400.

On the other hand, in FIG. 4A, the reference numeral "500" denotes a support frame whereby the spindle motor assembly 100 and the loading unit 300 are supported. The support frame 500 may be fixed inside the main body of the recording/reproducing device such as a camcorder, or may be movably installed in the main body of the information recording/reproducing device.

The control unit 400 controls a rotation speed of the spindle motor 110 according to the position of the optical pickup 200 in the radial direction of the disk, by controlling the driving of the spindle motor.

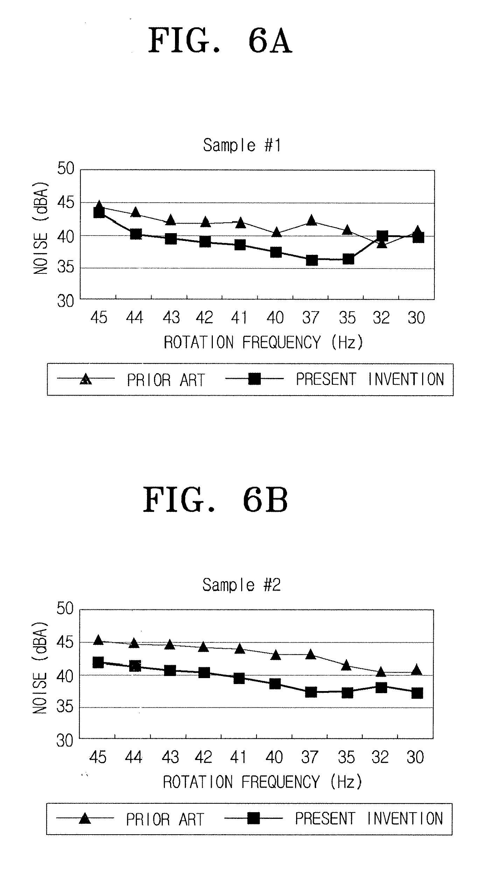

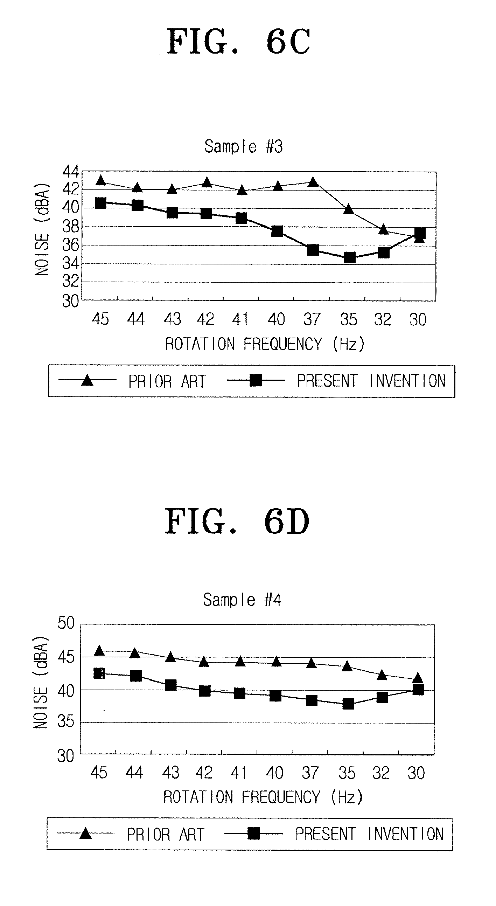

According to the spindle motor assembly 100 and the information recording/reproducing device as constructed above according to the present general inventive concept, the support pad 140 of the disk 1 is positioned within a point that corresponds to about a half of the diameter of the turntable 120 from the rotation center of the turntable 120, and thus the noise due to the vibration of the disk 1 can be remarkably reduced. FIGS. 6A to 6D show experimental data representing noises generated due to the vibration of the disk 1 as the number of rotations of the spindle motor is changed, in comparison to the noises generated according to the conventional spindle motor assembly. As a result of experiment using four samples, it was confirmed that the noise could be improved by 7.2dB at maximum, in comparison to the conventional structure. In the experiment, the noise was measured at a point corresponding to about 5cm on the upper part of the disk 1 in a state that the spindle motor assembly was not installed in the information recording/reproducing device.

As described above, according to the spindle motor assembly and the information recording/reproducing device having the same according to the present invention, by positioning the support pad 140 for supporting the disk within a point that corresponds to 2/3 of the diameter of the turntable, the noise generation region of the 80mm disk is widened, and this causes the frequency response function (FRF) characteristics for the main vibration generation region of the spindle motor that reaches 2160Hz to become smaller.

Accordingly, the noise due to the rotation of the disk can be reduced. Also, by reducing the noise, the noise generation during the recording and reproducing of sound data is minimized, and thus the quality of the sound data can be heightened.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A spindle motor assembly comprising:
a spindle motor;
a turntable to be rotated by the spindle motor together with a disk to be placed and supported thereon; and
a support pad, provided on the turntable to support a lower surface of the disk;
wherein the support pad is provided at a point that corresponds to 2/3 of a diameter of the turntable with respect to a rotation center of the disk.

2. The spindle motor assembly of claim 1, wherein the diameter of the turntable is smaller than about 30mm.

3. The spindle motor assembly of claim 1, wherein a width of the support pad is in the range of 2mm to 3mm.

4. The spindle motor assembly of claim 1, wherein the support pad is made of rubber.

5. The spindle motor assembly of claim 1, further comprising:
a chucking unit protruding from the rotation center part of the turntable to clamp an upper surface of the disk.

6. The spindle motor assembly of claim 1, wherein the disk has a diameter of 80mm.

7. The spindle motor assembly of claim 6, wherein the disk comprises at least one of a CD, a DVD, a BD, and an HD-DVD.

8. An information recording/reproducing device comprising:
a spindle motor assembly provided with a turntable on which a disk is placed and supported thereon, a spindle motor to rotate the turntable, and a support pad provided on the turntable to support the disk;
an optical pickup unit to recording and/or reproducing optical information by irradiating light onto the disk;
a loading unit to load and/or unload the optical pickup; and
a control unit to control driving of the spindle motor, the optical pickup, and the loading unit;
wherein the support pad is arranged at a point that corresponds to 2/3 of a diameter of the turntable with respect to a rotation center of the disk.

9. The information recording/reproducing device of claim 8, wherein the diameter of the turntable is smaller than about 30mm.

10. The information recording/reproducing device of claim 8, wherein a width of the support pad is in the range of 2mm to 3mm.

11. The information recording/reproducing device of claim 9, wherein the support pad is made of rubber.

12. The information recording/reproducing device of claim 8, wherein the spindle motor assembly further comprises a chucking unit protruding from the rotation center part of the turntable to clamp an upper surface of the disk.

13. The information recording/reproducing device of claim 8, wherein the disk has a diameter of 80mm.

14. The information recording/reproducing device of claim 13, wherein the disk comprises at least one of a CD, a DVD, a BD, and an HD-DVD.

15. A spindle motor assembly comprising:
a spindle motor;
a turntable to rotate by the spindle motor; and
a support pad disposed on the turntable and spaced apart from an outer circumference of the turntable by a distance longer than a width of the support pad in a radial direction of the turntable.

16. The spindle motor assembly of claim 15, wherein the support pad comprises an inside circumference disposed on a position apart by about 16mm from a center of the turntable when the turntable has a diameter of 30mm.

17. An information recording and/or reproducing device comprising:
a spindle motor assembly having a spindle motor, a turntable to rotate by the spindle motor, and a support pad disposed on the turntable and spaced apart from an outer circumference of the turntable by a distance longer than a width of the support pad in a radial direction of the turntable to support a disk;
a pickup unit to record and/or reproduce information to and/or from the disk; and
a loading unit to load and/unload the pickup unit with respect to the disk.

18. The information recording and/or reproducing device of claim 17, further comprising:
a chucking unit to chuck the disk with the turntable,
wherein the support pad is spaced apart from an outer circumference of the chucking unit by a distance shorter than a width of the support pad in the radial direction.

19. An information recording and/or reproducing device comprising:
a spindle motor assembly having a spindle motor, a turntable to rotate by the spindle motor, and a support pad disposed on the turntable to support a disk;
a chucking unit to chuck the disk with the turntable, and having an outer circumference spaced apart from the support pad by a distance shorter than a width of the support pad in a radial direction of the turntable;
a pickup unit to record and/or reproduce information to and/or from the disk; and
a loading unit to load and/unload the pickup unit with respect to the disk

20. The information recording and/or reproducing device of claim 19, wherein the support pad is spaced apart from an outer circumference of the turntable by a distance longer than the width of the support pad in the radial direction of the turntable to support the disk

21. The information recording and/or reproducing device of claim 19, wherein the chuck and the supporting pad of the turntable clamp the disk to reduce a frequency response function characteristic of a vibration generation region of the disk.
